Europäisches Patentamt

European Patent Office

Office européen des brevets

(11) Publication number: **0 404 431**
**A2**

## EUROPEAN PATENT APPLICATION

(21) Application number: **90306469.9**

(51) Int. Cl.⁵: **G21C 13/00**

(22) Date of filing: **14.06.90**

(30) Priority: **19.06.89 US 368503**

(43) Date of publication of application:
**27.12.90 Bulletin 90/52**

(84) Designated Contracting States:
**BE DE ES FR IT**

(71) Applicant: **WESTINGHOUSE ELECTRIC CORPORATION**
**Westinghouse Building Gateway Center**
**Pittsburgh Pennsylvania 15222(US)**

(72) Inventor: **Kordalski, Frank Joseph**
**1808 Educational Drive**
**White Oak, PA 15131(US)**
Inventor: **Reiner, Roger Timothy**
**509 Brookside Drive**
**Murrysville, PA 15668(US)**

(74) Representative: **van Berlyn, Ronald Gilbert**
**23, Centre Heights**
**London, NW3 6JG(GB)**

(54) **Annealing unit insertion and removal system.**

(57) A system is provided which allows moving an annealing unit 62 into a general position for insertion into a nuclear reactor vessel 10 by an operator using a remotely controllable polar crane 60 and optical cameras 86 and 87 to view one or more reference holes 102 in the sealing plate 82 of the reactor vessel 10. Once the unit 62 is in the approximate position for lowering, an automated tracking system is activated which guides the unit into the vessel. The tracking system includes reference infrared emitters 104 and 106 mounted on the sealing plate 82 of the vessel 10, infrared cameras 88 and 89 to capture the image of the emitters 104 and 106, and a computer 152 to calculate the difference between a target position and an actual position and cause the polar crane 60 to position the annealing unit 62 at the target position. The cameras 86-89 are mounted on an annealing unit carrying fixture 64 which includes camera tracks 90 over which the cameras 86-89 can be retracted to prevent heat damage to the cameras 86-89 during annealing. Contact sensors can be provided on the annealing unit 62 to detect contact between the unit 62 and the vessel 10 during insertion and removal. A range determination unit 110 can also be provided to determine the distance between the fixture 64 and the sealing plate 82 during insertion.

FIG. 2

## ANNEALING UNIT INSERTION AND REMOVAL SYSTEM

This application is related to U. S. applications assigned to Westinghouse entitled Modular Heater Assembly For In Situ Reactor Vessel Annealing by Bauer and Mavretish having U.S. Serial No. 368,454; and Water Shielding Coffer Dam For Reactor Annealing by Bauer, Mavretish and Grimm having U.S. Serial No. 368,635. Both were originally filed in the U.S. on June 19, 1989.

The present invention is directed to a system which automatically inserts into and removes an annealing unit from an irradiated nuclear reactor vessel and, more particularly, a system which provides a tracking and guidance system which will insert and remove the annealing unit without human intervention and which will reduce the exposure time of personnel to radiation and reduce the time needed for the overall annealing operation.

During the normal operation of a nuclear reactor at a power generating plant, the steel reactor vessel, which contains the nuclear fuel, is exposed to intense radiation. This radiation causes changes in the fine grain structure of the steel walls of the vessel. These structural changes make the walls brittle, a problem traditionally called reactor vessel embrittlement. A brittle metal is less flexible and more likely to break when put under a strain. Because of the embrittlement phenomena, the United States Nuclear Regulatory Commission requires that the reactor vessel be removed from service when the embrittlement reaches a predetermined stage, thus ending the useful life of this portion of the nuclear power plant. Replacement of the vessel is extremely expensive because the vessel is built into and is a part of the reactor containment building, thereby making replacement economically impractical.

It is an object of the present invention to provide a system which will allow fast insertion and removal of an annealing unit to extend the life of the nuclear reactor vessel in a nuclear power plant by annealing the vessel.

It is another object of the present invention to provide automatic insertion and removal of the annealing unit.

It is a primary object of the present invention to provide a remotely controllable annealing unit insertion system that overcomes the operators inability to see the reactor vessel during the insertion operation.

The above objects can be accomplished by a system which allows moving an annealing unit into a general position for insertion into the nuclear reactor vessel by an operator using a remotely controllable polar crane and optical cameras to view the top of the reactor vessel. Once the unit is in the approximate position for lowering, an automated tracking unit is activated which guides the annealing unit into the vessel using reference infrared emitters mounted on the top of the vessel, infrared cameras to capture the image of the emitters and a computer to calculate the difference between a target position and an actual position, and produce outputs to the polar crane to position the annealing unit at the target position.

These together with other objects and advantages which will be subsequently apparent, reside in the details of construction and operation as more fully hereinafter described and claimed, reference being had to the accompanying drawings forming a part hereof, wherein like numerals refer to like parts throughout.

Fig. 1 is a cut away view of a nuclear reactor containment building showing a reactor vessel 10;

Fig. 2 is a side view of an annealing unit 62 being lowered into the reactor vessel 10;

Fig. 3 is a detailed side view of the top of the annealing unit 62 and an annealing unit carrying fixture 64;

Fig. 4 is a top view of the fixture 64 and annealing unit 62;

Fig. 5 illustrates the actual and target positions for the annealing unit 62;

Fig. 6 illustrates the geometry of the infrared cameras 88 and 89 and infrared emitters 104, 106 and 132 during annealing unit positioning;

Fig. 7 illustrates the equipment used to lower and control the lowering of the annealing unit 62;

Fig. 8 illustrates the insertion operation; and

Fig. 9 is a flowchart of the automated insertion and removal process.

Annealing is a process of heating and cooling a substance such as steel, which will make the steel less brittle. If a reactor vessel in a nuclear power plant can be annealed, the useful life of the plant can be extended without requiring replacement of the vessel. To anneal a vessel fixed in a containment building, a very large annealing unit, as described in the U.S. application entitled Modular Heater Assembly For In Situ Reactor Vessel Annealing, must be lowered into and removed from the vessel. The annealing unit includes heating coils and temperature sensors that can be damaged if they contact the sides of the vessel and includes ceramic spacers that can damage the interior of the reactor vessel if they contact the reactor vessel wall. As a result, the annealing unit must be lowered into the vessel without contacting the sides of the vessel even though the reactor vessel cannot be seen by the operator during the operation, because the view of the reactor vessel is blocked by the annealing unit itself. The period during which the insertion, annealing and removal operations are performed is an out-of-service period, the power company which owns the reactor is not receiving revenue from the plant during this time and, as a result, the entire annealing process needs to be performed as fast as possible. The area in the containment building where the heater unit is assembled, and particularly over the reactor vessel, is exposed to low levels of radiation making it desirable to perform the annealing unit insertion and removal operations remotely.

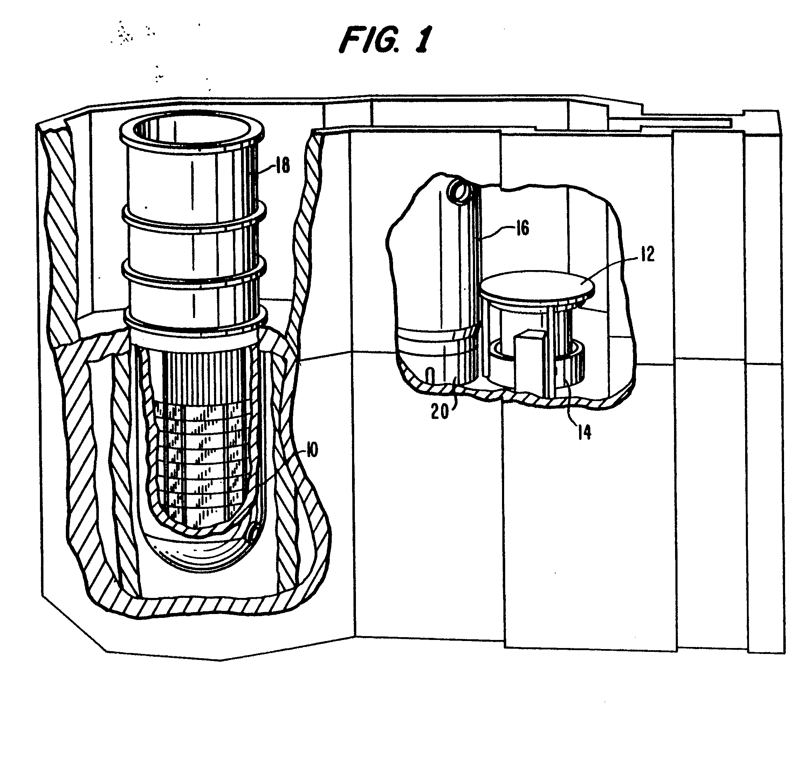

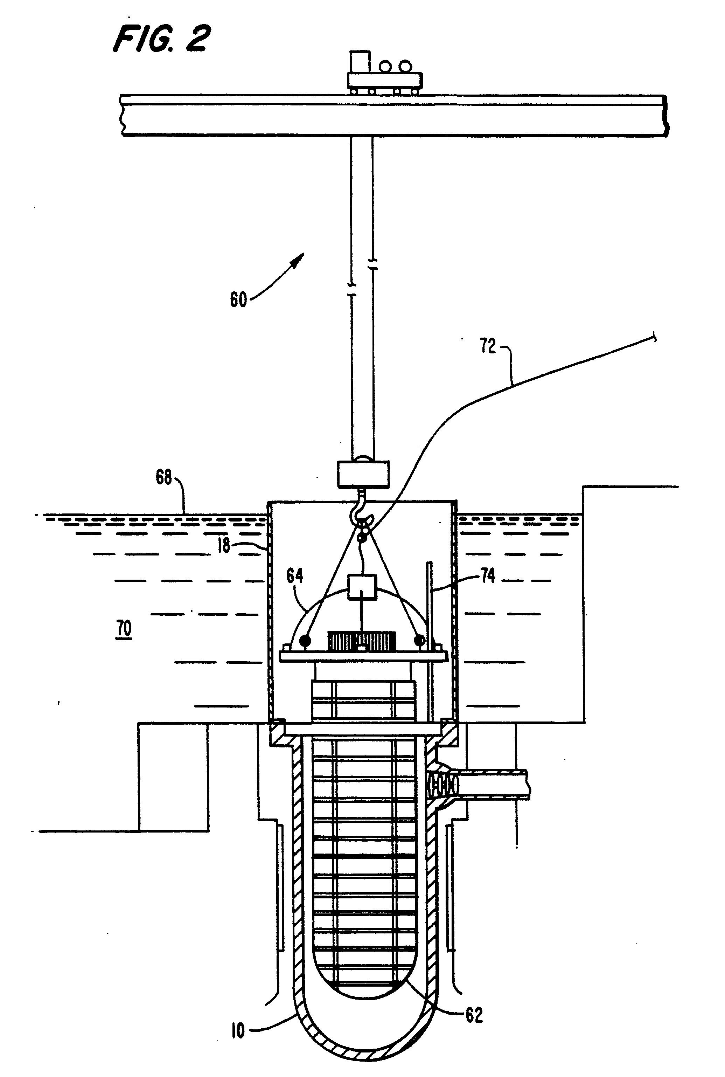

Prior to the insertion operation, as illustrated in Fig. 1, the reactor vessel head must be removed from the reactor vessel 10, the reactor instrumentation assembly 12 inside the head must be placed in an underwater storage rack 14, the core barrel 16 must be removed and placed in a similar underwater storage rack 20, a water dam 18 must be placed around the top of the reactor vessel 10 and sealed thereto. As illustrated in Fig. 2, after removing the annealing unit from its shipping container, the containment building polar crane 60 is used to manipulate the annealing unit 62 and annealing unit carrying fixture 64 into position and lower it into the reactor vessel 10 as the water is pumped out of the vessel 10. By pumping the water out as the unit 62 is lowered into the vessel 10, shielding by both water and the unit 62 is provided. The unit 62 is lowered through the dam 18 with the dam 18 preventing water 68, which floods the refueling cavity 70, from filling the reactor vessel 10 during the annealing operation. A description of the dam 18 can be found in the U.S. application entitled Water Shielding Coffer Dam For Reactor Annealing previously mentioned. As illustrated in Fig. 2, video and contact sensor cables 72 are connected to the fixture 64. During the insertion and removal process a guide rod 74 can also be used to help position the annealing unit 62 and annealing unit carrying fixture 64.

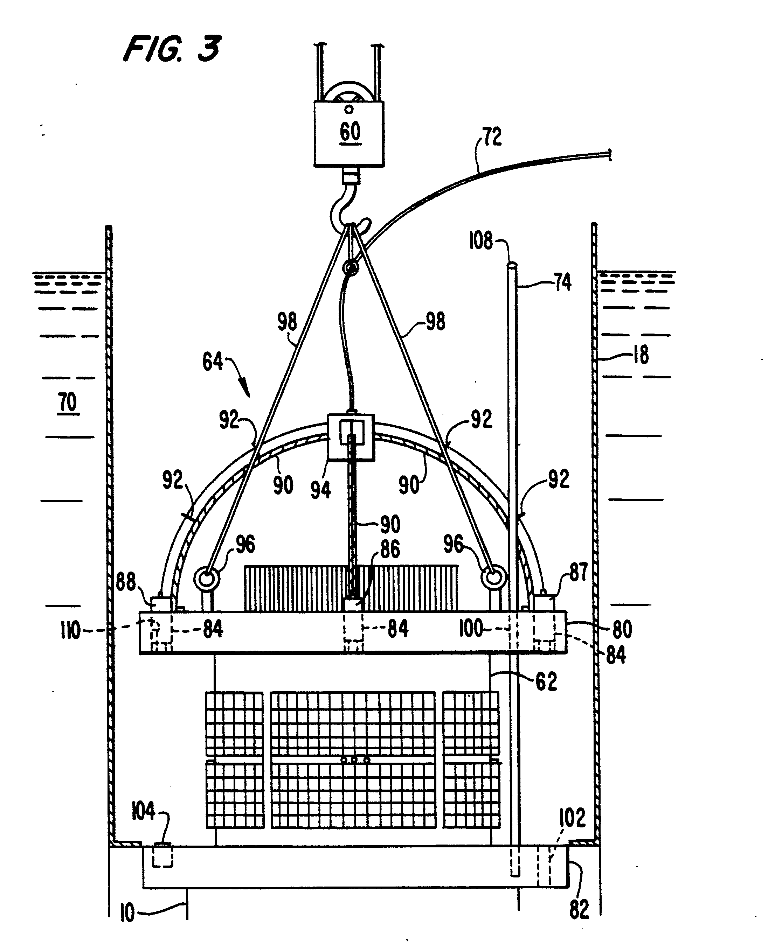

The annealing unit carrying fixture 64 includes a top plate 80, as illustrated in Fig. 3, which rests on the vessel seal plate 82 when the fixture 64 and unit 62 are in place. The top plate 80 has black and white and infrared camera slots 84 which receive black and white cameras 86 and 87 and infrared cameras. Only three cameras 86, 87 and 88 and three slots are shown in this figure, the fourth infrared camera 89, the third being indicated by reference number 88, is hidden from view behind the left most black and white camera 86. The slots 84 include a mechanism, such as limit switches, which will cause the cameras to rest in a predetermined position when moved down camera guide tracks 90. Each guide track 90 also includes cable standoff brackets 92 which allow the cable to play out above the camera tracks 90 when the cameras 86 and 88 are lowered into position. The camera tracks 90 and cable standoffs 92 allow the cameras 86 and 88 to be retracted away from the top plate 80, during the annealing operation to prevent heat caused camera damage, by controlling their position with a camera position control unit 94. This unit 94 includes conventional digitally controllable motors that wind the camera cables up on drums thereby pulling the cameras away from the plate 80. Conventional contact type position sensors for the plate 80 and unit 94 can be used to confirm that each camera is in the proper position.

The annealing unit carrying fixture 64 also includes lifting rings 96 attached to the top plate 80 for cables 98 which are used to carry the fixture 64 and annealing unit 62 during insertion and removal by the polar crane 60. The top plate 80 also includes a guide hole 100 through which the guide rod 74 moves during insertion and removal.

The black and white cameras 86 and 87 provide a visual image of the seal plate 82 of the reactor vessel 10 to allow a human operator to move the annealing unit 62 from the shipping container to the approximate position over the reactor vessel 10 where it will be lowered into the vessel 10. The cameras 86 and 87 are mounted so that a reference position, such as a particular bolt hole 102, can be centered in the black and white camera display image for the black and white cameras 86 to place the annealing unit 62 in the approximate reference position for starting the automated insertion and removal process.

The infrared cameras 88 are designed to image at least two infrared emitters, where one is shown as reference number 104 in this figure. The emitters are mounted on the top of the reactor vessel seal plate 82. During the automated removal and insertion process the infrared emitters are used to control the positioning of the polar crane 60 to allow insertion of the annealing unit 62 without contacting the sides of the reactor vessel 10. An additional infrared emitter 108 can be mounted on the top of the guide rod 174 to allow a third source of positioning information during the period prior to engagement of the guide rod 74 with the hole 100 in the top plate 80. This will help ensure that the guide rod 74 is properly inserted into the hole 100.

If the polar crane 60 does not have a sufficiently accurate vertical position indicator the top plate 80 is provided with a distance measuring unit 110, such as a conventional ultrasonic range finder, which will allow the distance from the top plate 80 to the seal plate 82 to be accurately determined. This range determination unit 110 must also be mounted for retraction along the camera track 90.

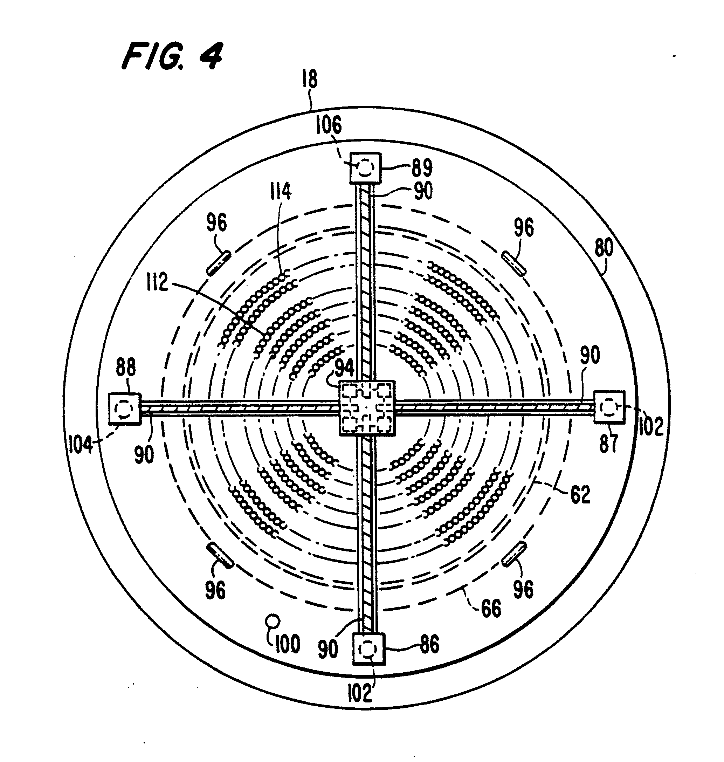

Fig. 4 is a top view of the carrying fixture 64 and illustrates the power posts 112 and thermocouple connectors 114 of the annealing unit 62 that emerge through the center portion of the top plate 80. This figure also illustrates all the cameras 86-88 and the hole 100.

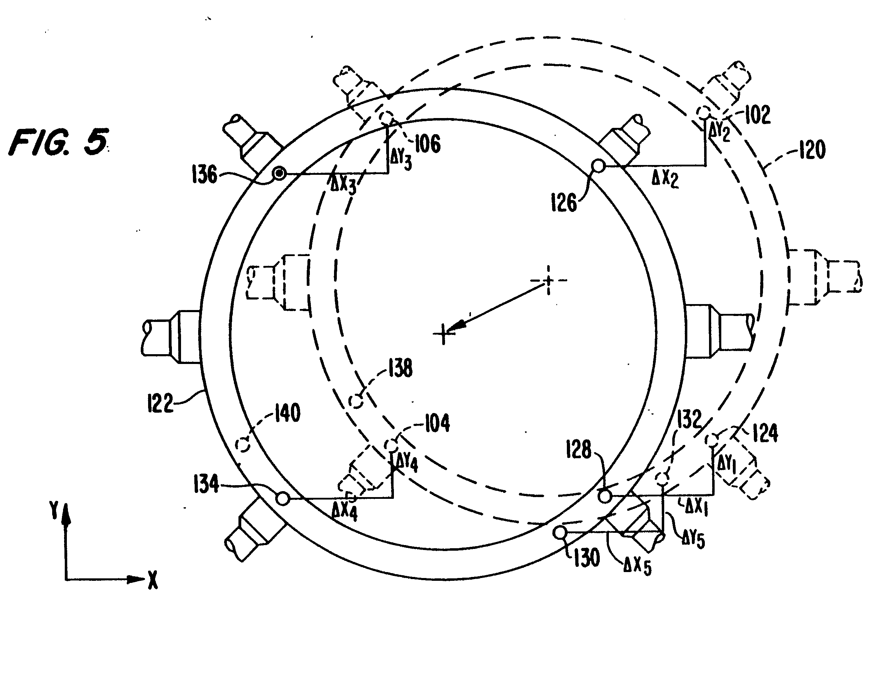

Fig. 5 shows a target reference image and actual position image of the top plate 82 as would be seen by the black and white, and infrared cameras when the unit 64 is high above the vessel. The target image 122 is offset from the actual position image 120 by an exaggerated amount to demonstrate the principals of the present invention. When the operator is visually positioning the carrying fixture 64 over the seal plate 82, the operator moves the carrying fixture 64 so that the video image will align with the target image. This is accomplished by aligning the bolt holes 102 and 124 with the target positions 126 and 128 for the bolt holes in the target image. The target image can be as simple as two indicators for the bolt holes or as complicated as the image of the seal plate from a Computer Aided Drafting (CAD) unit. The operator will move the carrying fixture in a direction to reduce the difference $\Delta X_1$, $\Delta X_2$ and $\Delta Y_1$, $\Delta Y_2$ between the positions of the target 126 and 128 and the actual 102 and 124 positions. During this process the operator can also use the target 130 and actual 132 positions of the top of the guide rod 74 to assist in this operation. By providing three such target positions the operator can easily visually align the fixture 64 and heater unit 62 in the approximate position for lowering into the vessel. It is preferable that each camera be positioned so that the corresponding bolt hole will appear in the center of the video image when the unit 62 is in the start position for automatic lowering. In this start position the corresponding emitters 104 and 106 for the cameras 88 and 89 would also appear in the center of the camera image.

Once the fixture 64 and annealing unit 62 are in the approximate lowering or start position the automated insertion and removal process is activated to align the target infrared emitter positions 130, 134 and 136 with the actual positions 104, 106 and 132 by determining the movement distances $\Delta X_3$ through $\Delta X_5$ and $\Delta Y_3$ through $\Delta Y_5$ and moving the polar crane by the amounts detected. Once again, by providing three emitters 106, 104 and 132 very accurate positioning can be accomplished. However, since the emitter 108 on the top of the guide rod 74 will disappear from the camera images, it is possible to provide an additional emitter 138 and target position 140 that will also be within the visual range of one of the infrared cameras after the emitter 108 disappears and until the unit is substantially in the final position.

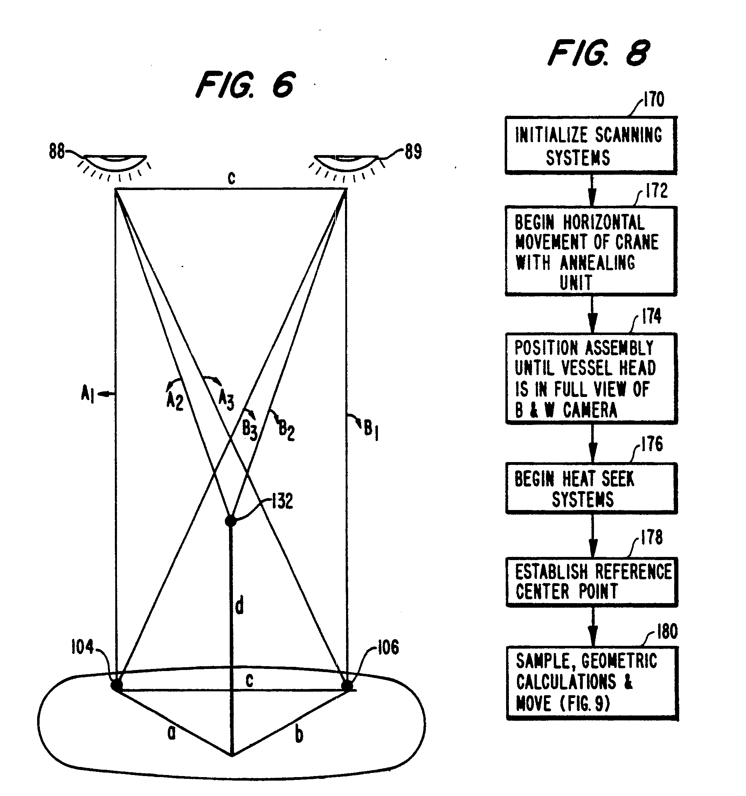

Fig. 6 illustrates the geometric relationship between the cameras 88 and 89 and the infrared emitters 104, 106 and 132 which will allow the position of the top plate 80 with respect to the seal plate 82 of the reactor vessel to be determined. For each camera 88 and 89, assume that the coordinates of the actual video image 120 are $(X_{3A},Y_{3A})$, $(X_{4A},Y_{4A})$, and $(X_{5A},Y_{5A})$ corresponding to infrared emitters at positions 104, 106 and 132. The coordinates of the target video image 132 are $(X_{3T},Y_{3T})$, $(X_{4T},Y_{5T})$, and $(X_{5T},Y_{5T})$ corresponding to target positions (virtual image as determined by cameras) 130, 134, and 136. The positions 104, 106 and 132 are vertices of a triangle whose centroid must be matched to the centroid of the target triangle formed by the target positions 130, 134, and 136. These two triangles are assumed to be congruent.

If the polar crane moves the heater assembly by an increment of $\Delta X$ and $\Delta Y$, the following relationships hold:

$$\text{coordinates of centroid of actual image} = \frac{X_{3A}+X_{4A}+X_{5A}}{3} \quad , \quad \frac{Y_{3A},Y_{4A},Y_{5A}}{3} \tag{1}$$

$$\text{coordinates of centroid of target image} = \frac{X_{3T}+X_{4T}+X_{5T}}{3} + \Delta X \quad , \quad \frac{Y_{3T}+Y_{4T}+Y_{5T}}{3} + \Delta Y \tag{2}$$

From the above equations (1) and (2) the difference between actual and target positions can be determined. Based on these equations the polar crane moves the heating assembly until the following contraints are met:

$$\frac{X_{3A}+X_{4A}+X_{5A}}{3} = \frac{X_{3T}+X_{4T}+X_{5T}}{3} + \Delta X \qquad (3)$$

and

$$\frac{Y_{3A}+Y_{4A}+Y_{5A}}{3} = \frac{Y_{3T}+Y_{4T}+Y_{5T}}{3} + \Delta Y \qquad (4)$$

when simplified reduces to

$\Delta X = 0$ and $\Delta Y = 0$     (5)

When $\Delta X = 0$ and $\Delta Y = 0$, the lowering of the heater assembly can begin. After this point, the control system would continue to monitor the images and control unit position such that

$\Delta X_3 = 0$, $\Delta X_4 = 0$, $\Delta X_5 = 0$     (6)

$\Delta Y_3 = 0$, $\Delta Y_4 = 0$, $\Delta Y_5 = 0$     (7)

where $\Delta X_3 = \Delta X_{3A} - \Delta X_{3T}$, $\Delta X_4 = \Delta X_{4A} - \Delta X_{4T}$, etc.

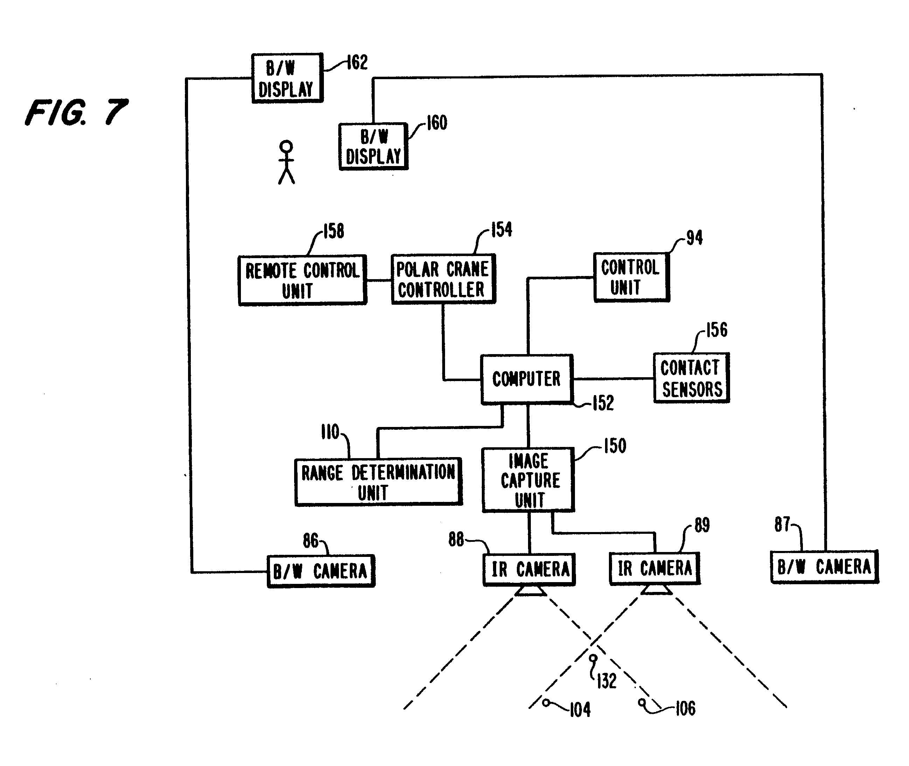

The output of each of the cameras 88 and 89 is cyclically captured by an image capture unit 150, as illustrated in Fig. 7. This image capture unit 150 is a conventional frame grabber and should cycle to produce an image frame at least every 0.1 seconds. The image capture unit 150 provides the infrared images to a computer 152 which determines the movement distances as previously discussed and outputs appropriate conventional movement commands to a conventional digital polar crane controller 154. One of ordinary skill in the art can provide the appropriate commands once the manufacturer of the digital crane controller is known. During the insertion process the computer 152 also monitors contact sensors 156 mounted on the annealing unit 62 and top plate 80 to ensure that the unit 62 is not moved whenever the unit 62 is in contact with or about to contact the reactor vessel 10. Fig. 7 also illustrates the remote control unit 158 used by the operator to control the polar crane 60 during initial positioning, the camera position control unit 94 and the range determination unit 110, as well as the cameras 86-89 and displays 160 and 162.

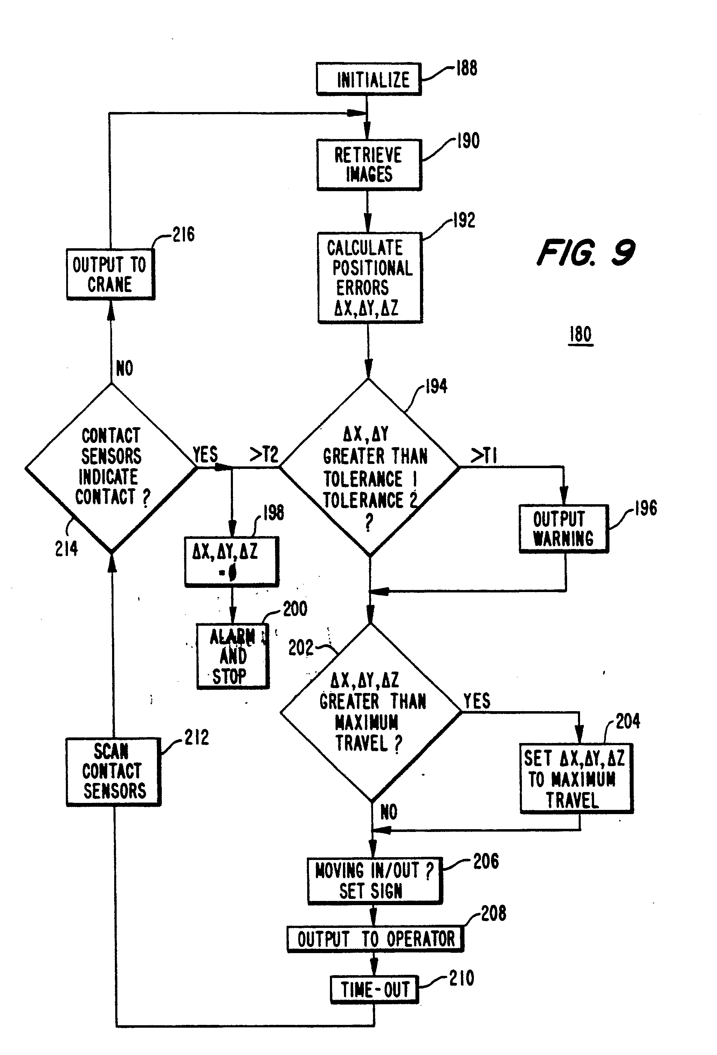

The positioning process begins 170, as illustrated in Fig. 8, by initializing the black and white scanning systems and moving 172 the annealing unit 62 with the crane 60 until the annealing unit 62 is in the approximate position for insertion, that is, in full view 174 of the black and white cameras and with the bolt holes aligned with the center of the black and white cameras. Next the infrared emitter and cameras are initialized 176 and the frame grabber is started. At this time a reference center point can be established 178 by the operator designating such using the black and white image or a reference image obtained from a CAD file image of the seal plate 82 of the reactor vessel 10. Next the automated process 180 for inserting and removing the annealing unit 62 is started as will be described in more detail with respect to Fig. 9.

During initialization of the automated process the operator sets the movement direction by indicating whether the polar crane 60 is inserting or removing the unit 62. During the automated process this direction of movement is incorporated into the movement distances by providing a sign to the movement distance calculated by the computer 152. Each movement cycle begins, as illustrated in Fig. 9, by retrieving 190 the images produced by the infrared cameras 88 and 89. Several different types of frame grabbers 150 are commercially available however, it is preferred that the frame grabber 150 process the image of the cameras 88 and 89 to produce the coordinates of the locations in the image where the light from the infrared sources 104 and 106 are detected. Such a frame grabber 150 is available from Colorado Video. Next the computer 152 calculates 192 the positional errors as discussed previously with respect to equations (1) and (2). Then the movement distances $\Delta X$ and $\Delta Y$ are compared 194 to two difference tolerances. The first tolerance is a distance between the unit 64 and the reactor vessel wall that provides a safety margin between the unit 64 and the wall. When the unit 64 is within this tolerance, the computer 152 outputs 196 a warning to the operator. The second tolerance is an amount of movement which will cause the unit 62 to actually contact the vessel wall. If this tolerance is exceeded, all movement quantities are set 198 to zero, the computer 152 issues 200 an alarm to the operator and stops all movement, requiring human intervention for continued movement of the unit 62. If the movement distances are within the tolerances, indicating that the unit 62 can be moved, the movement distances are compared 202 to the maximum amounts of movement which are allowed during a single movement cycle. These maximum movements are determined by calculating the maximum amount of movement which can be performed without causing the unit 62 to oscillate. If the amounts of movement are greater than the maximum allowable travel, the movement amounts are set 204 to the maximum. Since the height $\Delta Z$ above the vessel is much larger than the maximum movement during all but the last part of the descent, this approach will always set the vertical movement amounts at a maximum until the unit 62 is within the maximum movement amount of the final position. In some circumstances, depending on the position, it may be necessary to vary the maximum movement amounts to provide a soft or slow approach to a position. This feature could be added by a person of ordinary skill in the art. Next the sign of the vertical movement direction is applied 206 to the vertical movement distance $\Delta Z$ depending on whether the unit 62 is being inserted or removed. Next the amounts of movement are output to the operator 208 and a time out period 210 is started. This time-out period allows the operator to visually confirm that the movement amounts are within the allowable ranges before the movement amounts are output to the crane 60. This time-out period also allows the operator to override the calculated amounts of movement and change the amounts of movement to different values. Next the contact sensors are scanned 212 and a determination 214 is made as to whether the contact sensors on the unit 62 are in contact with the vessel wall. If the contact sensors indicate contact, then all movement distances are set 198 to zero and the process stops 200. If not the movement distances are output 216 to the crane 60. the crane 60 is given time to move the desired distance and the movement cycle starts again. The time required to move the crane could of course be the calculation time plus the time-out period, thereby allowing new calculations to be performed while the crane 60 is moving. During the insertion process contact sensors on the plate 80 which indicate contact of the plate 80 with the plate 82 will automatically stop the descent process. Because a shut down of the automatic system is possible, the manual remote control unit 158 is connected to the crane controller 154 allowing manual control in such situations. The removal process is the same except the sign of $\Delta Z$ is reversed and the operator can accelerate the removal speed when he sees that the unit 62 has cleared the top plate 82. Of course at the beginning of the removal process the contact signal for the contact between the plates 80 and 82 must be ignored.

The present invention has been described using infrared sources and cameras, however, other types of sources and detectors can be used. For example a light beam could be bounced off a target mounted on the vessel to provide positional information. Using a laser will also allow range information to be derived removing the need for the ranging unit when the polar crane controller will not provide appropriate information.

The many features and advantages of the invention are apparent from the detailed specification and thus it is intended by the appended claims to cover all such features and advantages of the invention which fall within the true spirit and scope thereof. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

## IDENTIFICATION OF REFERENCE NUMERALS USED IN THE DRAWINGS

| LEGEND | REF. NO. | FIGURE |
|---|---|---|
| B/W CAMERA | 86 | 7 |
| B/W CAMERA | 87 | 7 |
| IR CAMERA | 88 | 7 |
| IR CAMERA | 89 | 7 |
| CONTROL UNIT | 94 | 7 |
| RANGE DETERMINATION UNIT | 110 | 7 |
| IMAGE CAPTURE UNIT | 150 | 7 |
| COMPUTER | 152 | 7 |
| POLAR CRANE CONTROLLER | 154 | 7 |
| CONTACT SENSORS | 156 | 7 |
| REMOTE CONTROL UNIT | 158 | 7 |
| B/W DISPLAY | 160 | 7 |
| B/W DISPLAY | 162 | 7 |
| INITIALIZE SCANNING SYSTEMS | 170 | 8 |
| BEGIN HORIZONTAL MOVEMENT OF CRANE WITH ANNEALING UNIT | 172 | 8 |
| POSITION ASSEMBLY UNTIL VESSEL HEAD IS IN FULL VIEW OF B&W CAMERA | 174 | 8 |
| BEGIN HEAT SEAK SYSTEMS | 176 | 8 |
| ESTABLISH REFERENCE CENTER POINT | 178 | 8 |
| SAMPLE, GEOMETRIC CALCULATIONS & MOVE (FIG. 9) | 180 | 8 |
| INITIALIZE | 188 | 9 |
| RETRIEVE IMAGES | 190 | 9 |
| CALCULATE POSITIONAL ERRORS $\Delta X$, $\Delta Y$, $\Delta Z$ | 192 | 9 |
| $\Delta X$, $\Delta Y$ GREATER THAN TOLERANCE 1 TOLERANCE 2? | 194 | 9 |
| OUTPUT WARNING | 196 | 9 |

# EP 0 404 431 A2

## IDENTIFICATION OF REFERENCE NUMERALS USED IN THE DRAWINGS

| LEGEND | REF. NO. | FIGURE |
|---|---|---|
| $\Delta X$, $\Delta Y$, $\Delta Z$ | 198 | 9 |
| ALARM AND STOP | 200 | 9 |
| $\Delta X$, $\Delta Y$, $\Delta Z$ GREATER THAN MAXIMUM TRAVEL? | 202 | 9 |
| SET $\Delta X$, $\Delta Y$, $\Delta Z$ TO MAXIMUM TRAVEL | 204 | 9 |
| MOVING IN/OUT? SET SIGN | 206 | 9 |
| OUTPUT TO OPERATOR | 208 | 9 |
| TIME-OUT | 210 | 9 |
| SCAN CONTACT SENSORS | 212 | 9 |
| CONTACT SENSORS INDICATE CONTACT? | 214 | 9 |
| OUTPUT TO CRANE | 216 | 8 |

## Claims

1. A system for inserting a unit (62) into a vessel (10), characterized by:
a position reference (104) attached to the vessel (10);
a tracking module (88) attached to the unit (62) producing position information for the position reference (104); and
control means (152), connected to the tracking module (104), for controlling the position of the unit (62) as the unit (62) is inserted in the vessel (10) using the position information produced by the tracking module (88).

2. A system as recited in claim 1, wherein said position reference (104) comprises a light source (104) and said tracking module (88) comprises a camera (88).

3. A system as recited in claim 2, further comprising:
a carrying fixture (64) attached to the unit (62);
a lifting device (60) attached to said carrying fixture (64);
a camera track (90) attached to said carrying fixture (64) and carrying said camera (88); and
a camera retraction unit (94) attached to said track (90) and said camera (88).

4. A system as recited in claim 3, wherein said fixture (64) includes a top plate (80) having a hole (100) and said system further comprises a guide rod (74) attached to the vessel (10) for engaging the hole (100).

5. A system as recited in claim 4, wherein said control means comprises a computer (152), connected to said camera (88) and said lifting device (60), for determining the distance between a target position and an actual position of the unit (62) using the position information and outputting movement distances to said lifting device (60).

6. A system as recited in claim 5, wherein said camera (88) and said light source (104) operate at infrared wavelengths and said system further comprises:
a visible light optical camera (86), attached to said track (90), for providing a visual image of the vessel (10) to an operator; and
a manual remote controller (158), connected to said lifting device (60), for allowing the operator to control

8

said lifting device (60).

7. A system as recited in claim 6, further comprising a range determination unit (110), attached to said track (90) and connected·to said computer (152), for determining a distance between the vessel (10) and the unit (62).

8. A system as recited in claim 7, further comprising contact sensors (156) attached to the unit (62) and connected to said computer (152).

9. A system for inserting an annealing unit (62) into a nuclear reactor vessel (10), characterized by:

a guide rod (74) attached to the vessel (10);

infrared emitters (104 and 108) attached to the vessel (10) and said guide rod (74);

contact sensors (156) attached to the annealing unit (62) and producing contact signals when the contact sensors (156) contact the vessel (10);

a top plate (80) attached to the annealing unit (62) and having optical references (102);

camera tracks (90) attached to said top plate (80);

infrared cameras (88 and 89) attached to and retractable along said camera tracks (90) and viewing said emitters (104 and 108);

optical cameras (86 & 87) attached to and retractable along said camera tracks (90) and for viewing the references (102);

a range finder (110) attached to and retractable along one of said camera tracks (90) and producing a range signal;

a retraction unit (94) attached to said tracks (90), said infrared cameras (88 & 89), said optical cameras (86 & 87) and said range finder (110);

a polar crane (60) attached to said top plate (80);

an image capture unit (150) connected to said infrared cameras (88 & 89) and producing an image of said emitters (104 & 108);

a computer (152), attached to said image capture unit (150), said contact sensors (156), said range finder (110) and said polar crane (60), for controlling said crane (60) responsive to the image, the range signal and the contact signals to insert the annealing unit (62) into the vessel (10) and remove the annealing unit (62) from the vessel (10);

optical displays (160 & 162) connected to the optical cameras (86 & 87) and viewable by an operator; and

a crane remote control unit (158) connected to said crane (60) and controllable by the operator.

# FIG. 1

EP 0 404 431 A2

# FIG. 2

FIG. 3

EP 0 404 431 A2

FIG. 4

FIG. 5

EP 0 404 431 A2

# FIG. 6

# FIG. 8

| | |
|---|---|
| 170 | INITIALIZE SCANNING SYSTEMS |
| 172 | BEGIN HORIZONTAL MOVEMENT OF CRANE WITH ANNEALING UNIT |
| 174 | POSITION ASSEMBLY UNTIL VESSEL HEAD IS IN FULL VIEW OF B & W CAMERA |
| 176 | BEGIN HEAT SEEK SYSTEMS |
| 178 | ESTABLISH REFERENCE CENTER POINT |
| 180 | SAMPLE, GEOMETRIC CALCULATIONS & MOVE (FIG. 9) |

FIG. 7

*FIG. 9*

180